# EUROPEAN PATENT SPECIFICATION

(11) **EP 3 001 660 B1**
(45) Date of publication and mention of the grant of the patent: **20.01.2021**
(21) Application number: 15185454.4
(22) Date of filing: 16.09.2015
(51) Int. Cl.: H04M 3/51, H04M 7/00, H04M 3/428

(54) **METHOD, DEVICE AND SYSTEM FOR TELEPHONE INTERACTION**
VERFAHREN, VORRICHTUNG UND SYSTEM ZUR TELEFONISCHEN INTERAKTION
PROCÉDÉ, DISPOSITIF ET SYSTÈME D'INTERACTION TÉLÉPHONIQUE

(30) Priority: 26.09.2014 CN 201410505750
(43) Date of publication of application: 30.03.2016
(73) Proprietor: Xiaomi Inc., Beijing 100085 (CN)
(72) Inventor: XU, Ruijun, 100085 Beijing (CN)
(74) Representative: Cabinet Beau de Loménie

(56) References cited:
- EP-A2- 1 091 548
- US-A1- 2002 133 518
- US-A1- 2013 343 532

## Description

### TECHNICAL FIELD

The present disclosure relates to the field of call answering system, and more particularly, to a method, a device and a system for telephone interaction.

### BACKGROUND

A telephone agent system is a call answering system which needs participation of customer service staffs. Enterprise users typically employ a telephone agent system to provide services such as business consultation, business handling and return visits and surveys.

Due to the limited number of customer service staffs in each telephone agent system and the significant quantity of user terminals dialing the telephone agent system, there may be situations where no customer service staff can answer the call temporarily and a user terminal needs to wait, i.e. the telephone agent system is in a busy state. In the call waiting process, the telephone agent system usually plays a piece of music for the user terminal. When it is detected that there is one customer service staff which can answer the call, the telephone agent system may connect the user terminal with the terminal used by the customer service staff to make the customer service staff proceed with the providing of related services.

In the process of implementing the present disclosure, at least the following defects in the above method are found:
In the call waiting process, although a voice channel for voice calls remains between the user terminal and the telephone agent system, there is no actual effective information exchange. If the waiting time is too long, the user may hang up the current call directly, such that the current call becomes a void call, and a later call is needed to solve users' problems, which results in wastes in communication resources of the telephone agent system.

Document EP 1 091 548 and US 2013/0343532 both disclose known methods for telephone interaction.

### SUMMARY

To reduce the problems of the prior art solutions wherein a user may hang up the current call directly due to too long waiting time and thus the current call becomes a void call and a later call is needed to solve the user's problem, which results in wastes in communication resources of the telephone agent system, embodiments of the present disclosure provide a method, a device and a system for telephone interaction. The technical solutions are as follows.

According to a first aspect of embodiments of the present disclosure, a method for telephone interaction is provided in accordance with claim 1.

Particular embodiments are also provided in accordance with the dependent claims.

According to a second aspect of embodiments of the present disclosure, a user terminal for telephone interaction is provided in accordance with claim 4.

Particular embodiments are also provided in accordance with the dependent claims.

The technical solutions provided by embodiments of the present disclosure may include the following advantageous effects.

By a data channel between a user terminal and a telephone agent system, when the telephone agent system is in a busy state, an entertainment service may be provided to a user. Thus, the present disclosure may reduce the problems of the prior solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figs. 1A and 1B are block diagrams of two kinds of implementation environments of a method for telephone interaction provided by embodiments of the present disclosure;
Fig. 2 is a flow chart of a method for telephone interaction according to an exemplary embodiment;
Fig. 3 is a flow chart of a method for telephone interaction according to another exemplary embodiment;
Fig. 4A is a flow chart of a method for telephone interaction according to another exemplary embodiment;
Fig. 4B is a block diagram of a telephone interaction page according to the embodiment as shown in Fig. 4A;
Fig. 5A is a flow chart of a method for telephone interaction according to another exemplary embodiment;
Fig. 5B is a block diagram of a telephone interaction page according to the embodiment as shown in Fig. 5A;
Fig. 6A is a flow chart of a method for telephone interaction according to another exemplary embodiment;
Fig. 6B is a block diagram of a telephone interaction page according to the embodiment as shown in Fig. 6A;
Fig. 7 is a block diagram of a device for telephone interaction according to an exemplary embodiment;
Fig. 8 is a block diagram of a device for telephone interaction according to another exemplary embodiment;
Fig. 9 is a block diagram of a device for telephone interaction according to another exemplary embodiment;
Fig. 10 is a block diagram of a device for telephone interaction according to another exemplary embodiment;
Fig. 11 is a block diagram of a device for telephone interaction according to an exemplary embodiment;
Fig. 12 is a block diagram of a device for telephone interaction according to an exemplary embodiment; and
Fig. 13 is a block diagram of a system for telephone interaction according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art with reference to particular embodiments.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects associated to the invention as recited in the appended claims.

The "voice channel" herein usually refers to a voice channel established in a CS (Circuit Switched) domain for telephone voice services.

The "data channel" herein usually refers to a channel established in a PS (Packet Switch) domain or established in the Internet for data transmission services.

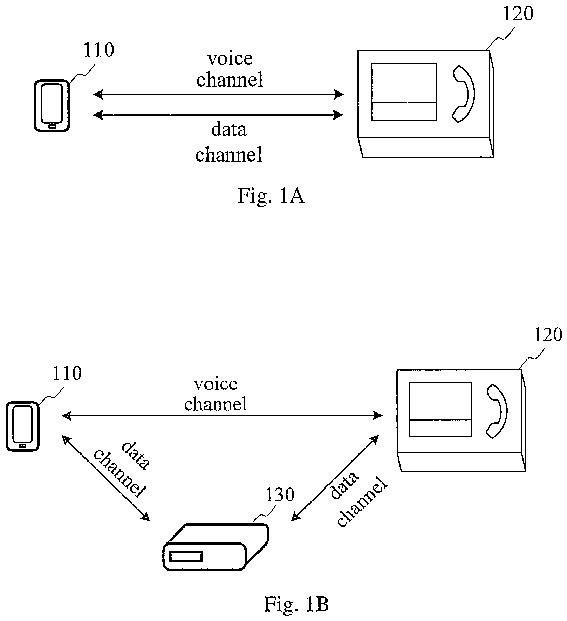

Referring to Fig. 1A, a block diagram of an implementation environment of a method for telephone interaction provided by embodiments of the present disclosure is shown. The implementation environment includes: a user terminal 110 and a telephone agent system 120.

The user terminal 110 is an electronic equipment capable of establishing a data channel when making voice calls. For example, the user terminal 110 is a smart phone, a tablet PC having the function of a telephone.

The telephone agent system 120 is an electronic equipment capable of establishing a data channel when making voice calls.

A voice channel and a data channel may be established between the user terminal 110 and the telephone agent system 120.

Referring to Fig. 1B, a block diagram of another implementation environment of a method for telephone interaction provided by embodiments of the present disclosure is shown. The implementation environment includes: a user terminal 110, a telephone agent system 120 and a third-party sever 130.

The user terminal 110 is an electronic equipment capable of establishing a data channel when making voice calls. For example, the user terminal 110 is a smart phone, a tablet PC having the function of a telephone.

The telephone agent system 120 is an electronic equipment capable of establishing a data channel when making voice calls.

The third-party sever 130 may be a server or a server cluster consisting of a number of servers, or a cloud computing service center.

A voice channel may be established directly between the user terminal 110 and the telephone agent system 120, and a data channel may be established by the third-party service platform 130 between the user terminal 110 and the telephone agent system 120.

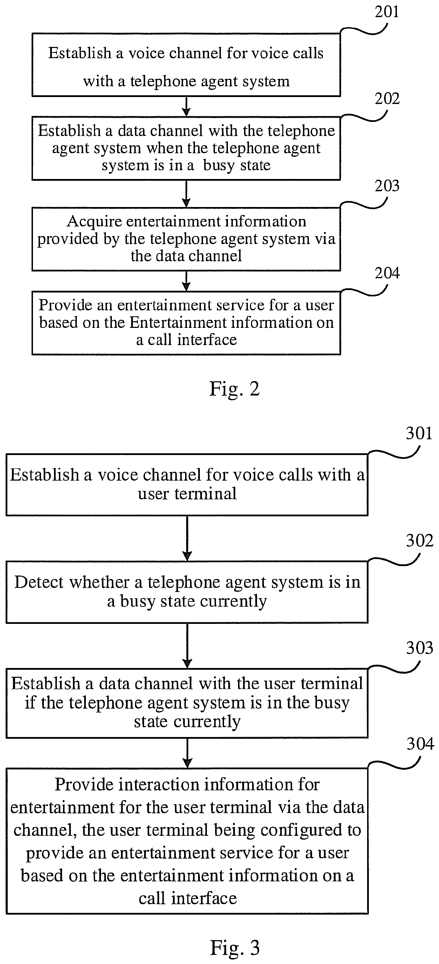

Referring to Fig. 2, a flow chart of a method for telephone interaction provided by an embodiment of the present disclosure is shown. The present embodiment is described by taking an example where the method for telephone interaction is applied in the user terminal 110 as shown in Fig. 1A. The method for telephone interaction may include the following steps.

In step 201, a voice channel for voice calls is established with a telephone agent system.

In step 202, a data channel is established with the telephone agent system when the telephone agent system is in a busy state.

In step 203, entertainment information provided by the telephone agent system is acquired via the data channel.

In step 204, an entertainment service is provided for a user based on the entertainment information on a call interface.

Accordingly, in the method for the telephone interaction provided by the present embodiment, by a data channel between a user terminal and a telephone agent system, when the telephone agent system is in a busy state, an entertainment service may be provided to a user. Thus, the method may reduce the problems of prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

Referring to Fig. 3, a flow chart of a method for telephone interaction provided by another embodiment of the present disclosure is shown. The present embodiment is described by taking an example where the method for telephone interaction is applied in the telephone agent system 120 as shown in Fig. 1A. The method for telephone interaction may include the following steps.

In step 301, a voice channel for voice calls is established with a user terminal.

In step 302, whether a telephone agent system is in a busy state currently is detected.

In step 303, a data channel is established with the user terminal if the telephone agent system is in the busy state currently.

In step 304, entertainment information is provided for the user terminal via the data channel. The user terminal is configured to provide an entertainment service for a user based on the entertainment information on a call interface.

Accordingly, in the method for telephone interaction provided by the present embodiment, by a data channel between a user terminal and a telephone agent system, when the telephone agent system is in a busy state, an entertainment service may be provided to a user. Thus, the method may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

The present disclosure will be described below by taking three embodiments as examples according to different contents of the entertainment service.

### (I) The telephone agent system provides a game service for a user terminal.

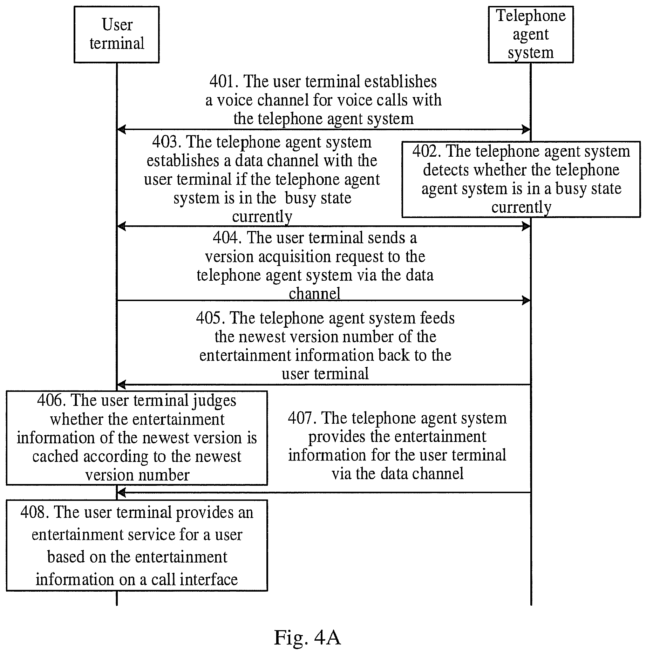

Referring to Fig. 4A, a flow chart of a method for telephone interaction provided by another embodiment of the present disclosure is shown. The present embodiment is described by taking an example where the method for telephone interaction is applied in the implementation environment as shown in Fig. 1A or 1B. The method for telephone interaction may include the following steps.

In step 401, a user terminal establishes a voice channel for voice calls with a telephone agent system.

A user may dial the number of the telephone agent system via the user terminal and establish a voice channel for voice calls with the telephone agent system when he needs human voice services from the telephone agent system.

In step 402, the telephone agent system detects whether the telephone agent system is in a busy state currently.

The telephone agent system detects whether it is in a busy state currently after establishing a voice channel with the user terminal. The busy state may refer to a state in which no idle customer service staff is available currently, i.e., the telephone agent system detects whether there is an idle customer service staff currently.

It shall be noted that, this step may be performed once every predetermined time interval, in order to provide the human voice service for the user terminal in time.

In step 403, the telephone agent system establishes a data channel with the user terminal if the telephone agent system is in the busy state currently.

The telephone agent system may establish a data channel with the user terminal for providing an entertainment service to the user terminal when the telephone agent system is in the busy state. In the present embodiment, the entertainment service may be a game service.

The data channel may be established by the following two ways:
First way: the user terminal directly establishes the data channel with the telephone agent system.
Second way: the user terminal establishes the data channel with the telephone agent system via a third-party service platform. The third-party service platform may be configured to record various data generated when each user terminal conducts the method for telephone interaction provided by the present embodiment.

The first establishing way may include the following sub-steps:
1. The telephone agent system sends a data channel establishment request to the user terminal.
   When the telephone agent system is in the busy state, it may send a data channel establishment request to the user terminal if it needs to provide an entertainment service for the user terminal.
2. The user terminal establishes a data channel with the telephone agent system depending on situations after receiving the data channel establishment request.

Whether the user terminal establishes the data channel with the telephone agent system may be decided by the user. That is, the user himself may decide whether to accept the entertainment service provided by the telephone agent system.

The second establishment way may include the following sub-steps:
1. The telephone agent system sends a data channel establishment request with the user terminal to the third-party service platform.
2. A third-party server sends the data channel establishment request to a corresponding user terminal.
3. The user terminal establishes the data channel with the telephone agent system via the third-party service platform depending on situations after receiving the data channel establishment request. That is, the telephone agent system establishes a data channel with the third-party service platform firstly, and then the user terminal establishes a data channel with the third-party service platform. After the data channel is established successfully, all the data transmitted between the user terminal and the telephone agent system needs to be forwarded by the third-party service platform.

The way by which the user terminal establishes the data channel with the telephone agent system may be set by the user terminal or the telephone agent system depending on situations.

Whether the entertainment information of any version is cached may be checked after the user terminal establishes the data channel with the telephone agent system. Step 404 is performed if the entertainment information of any version is cached. An instruction of waiting for receiving the entertainment information is sent to the telephone agent system and step 407 is performed if the entertainment information of any version is not cached. In the present embodiment, the entertainment information may refer to game information.

In addition, if the telephone agent system is not in the busy state, then a human voice service is directly provided for the user terminal.

In step 404, the user terminal sends a version acquisition request to the telephone agent system via the data channel.

The user terminal may send a version acquisition request to the telephone agent system via the data channel when the entertainment information of any version is cached at the user terminal.

In step 405, the telephone agent system feeds back the newest version number of the entertainment information to the user terminal.

The telephone agent system may feed the newest version number of the entertainment information back to the user terminal via the data channel when it receives the version acquisition request sent from the user terminal.

In step 406, the user terminal judges whether the entertainment information of the newest version is cached according to the newest version number.

The user terminal receives the newest version number of the entertainment information fed back by the telephone agent system via the data channel and judges whether the entertainment information of the newest version is cached locally according to the newest version number.

This step may contain the following two situations according to different judging results:
1) If the entertainment information of the newest version is not cached at the user terminal, then the step of acquiring the entertainment information provided by the telephone agent system via the data channel is performed.
   If the entertainment information of the newest version is not cached at the user terminal, i.e. the entertainment information cached at the user terminal is history entertainment information, then the user terminal may send an instruction of waiting for receiving the entertainment information to the telephone agent system, and step 407 is performed.
2) If the entertainment information of the newest version is cached at the user terminal, then the step of providing the entertainment service for the user based on the entertainment information on the call interface is performed.

If the entertainment information of the newest version is cached at the user terminal, then the user terminal may provide the entertainment service for the user directly based on the entertainment information, i.e. step 408 is performed.

In step 407, the telephone agent system provides the entertainment information for the user terminal via the data channel.

The telephone agent system may provide the entertainment information for the user terminal after receiving the instruction of waiting for receiving the entertainment information sent from the user terminal. In order to facilitate providing of the entertainment service to the user terminal via the data channel, the entertainment information may be entertainment information in a webpage form. The user terminal acquires the entertainment information in the webpage form provided by the telephone agent system via the data channel. The webpage form may comply with HTML5 (Hyper Text Markup Language 5) standard.

This step may have the following three situations according to different ways for acquiring the page of the entertainment information.

### First situation:

1. The user terminal sends the acquisition request for entertainment information to the telephone agent system via the data channel. This request may be sent by the user terminal automatically, or may be sent by the user terminal under operation of the user.
2. The telephone agent system provides the entertainment information in the webpage form for the user terminal based on the page acquisition request. That is, the telephone agent system sends the entertainment information in the webpage form to the user terminal after receiving the acquisition request for entertainment information sent from the user terminal, and the user terminal receives the entertainment information in the webpage form.

Because the entertainment information in the webpage form may include one or more than one pages, the acquisition request for entertainment information may be a request for directly acquiring all the pages of the entertainment information; or may be a request for only acquiring one page of the entertainment information. For example, for a web game of a breakthrough type, the user terminal may acquire the game page of the first level in the game information firstly, and then, when the first level of the game is passed through, the user terminal may send an acquisition request for acquiring the page corresponding to the second level of the web game to the telephone agent system automatically or after receiving the user's operation instruction. The telephone agent system sends the page corresponding to the second level of the web game to the user terminal after receiving the request.

Second situation: the telephone agent system pushes the information acquisition page in the webpage form to the user terminal via the data channel.

That is, the telephone agent system directly sends the information acquisition page in the webpage form to the user terminal, and the user terminal receives the information acquisition page in the webpage form. The pushing process may be controlled by the customer service staffs in the telephone agent system.

Similarly, because the entertainment information may include one or more than one pages, the telephone agent system may push all the pages of the entertainment information in a single push process; or may only push one page of the entertainment information in a single push process according to the control of the customer service staffs.

Third situation: this situation is a situation combining the first situation and the second situation. That is, when the user terminal acquires the entertainment information, it may receive the entertainment information pushed by the telephone agent system passively, or it may send the acquisition request for entertainment information actively to acquire the entertainment information from the telephone agent system. For example, the telephone agent system pushes game information of a shooting type game to the user terminal, and if the user does not like the shooting type game, he sends an acquisition request for game information of casual type game to the telephone agent system via the user terminal, and receives the game information of the casual type game sent by the telephone agent system.

It shall be noted that, if the history entertainment information is cached at the user terminal, when receiving the entertainment information of the newest version, the user terminal may not receive the same part in the entertainment information of the newest version as that in the history entertainment information, for example, the same picture files and audio files, and so on. Judgment information regarding the same part may be contained in the newest version number of the entertainment information acquired by the user terminal in step 405. Or, the telephone agent system acquires the version number of the history entertainment information cached at the user terminal, and then it sends different part in the entertainment information of the newest version from that in the history entertainment information according to the version number. In this way, wastes in communication resources may be reduced and efficiency in information acquisition may be improved.

In step 408, the user terminal provides the entertainment service for the user based on the entertainment information on a call interface.

The user terminal needs to make the entertainment information run and display it on the call interface firstly when providing the entertainment service for the user based on the entertainment information on the call interface.

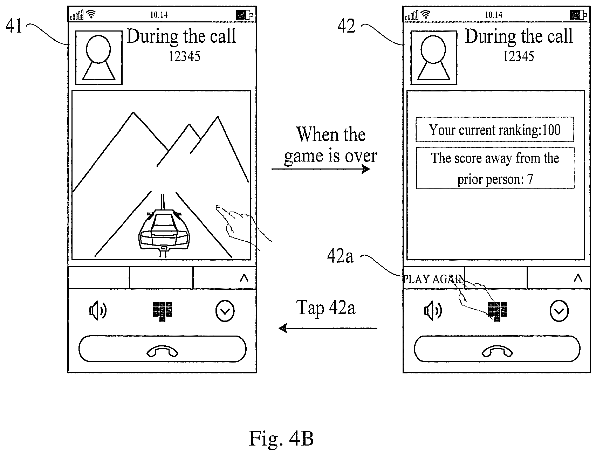

After the entertainment information running and displayed on the call interface, the user and/or the telephone agent system may control the entertainment information. For example, as shown in Fig. 4B, the user may conduct entertainment interaction regarding the page of auto racing type on page 41. The user may conduct the entertainment interaction by tapping a corresponding position. When the entertainment is over, the telephone agent system may control the user terminal to switch to page 42 to display the ranking of the user among all users. The user may also tap the "Play again" button 42a on page 42 to switch back to page 41 to restart the game.

It shall be noted that, the background music when the entertainment information running may be played via the voice channel, thus saving the communication resources of the data channel and utilizing the idle voice channel reasonably.

Accordingly, in the method for telephone interaction provided by the present embodiment, by a data channel between a user terminal and a telephone agent system, when the telephone agent system is in a busy state, an entertainment service may be provided to a user. Thus, the method may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

It shall be further noted that, in the method for telephone interaction provided by the present embodiment, whether the entertainment information of the newest version is cached at the user terminal is judged, and the entertainment service is provided to the user directly based on the entertainment information of the newest version when the entertainment information of the newest version is cached at the user terminal. Thus, wastes in communication resources are reduced.

It shall be further noted that, in the method for telephone interaction provided by the present embodiment, entertainment information in a webpage form is provided to the user terminal by the telephone agent system. Such providing manner is easy for providing entertainment services for the user terminal. Thus, the difficulties in providing entertainment services for the user terminal are reduced.

### (II) The telephone agent system provides a multimedia play service for the user terminal.

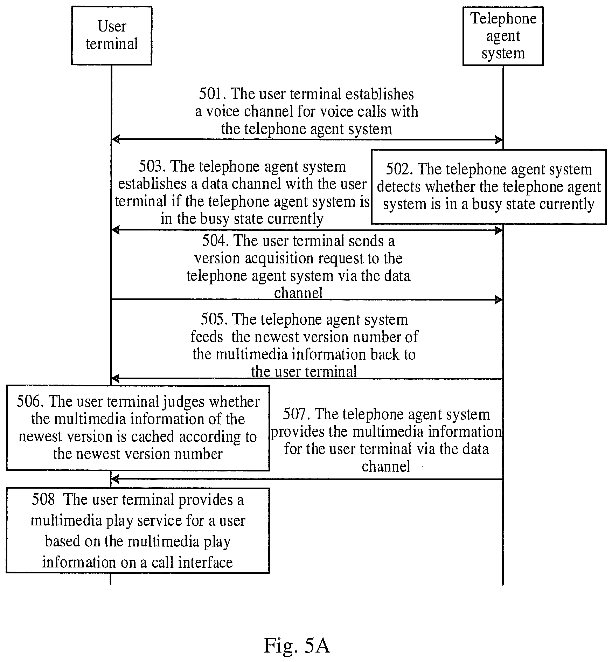

Referring to Fig. 5A, a flow chart of a method for telephone interaction provided by another embodiment of the present disclosure is shown. The present embodiment is described by taking an example where the method for telephone interaction is applied in the implementation environment as shown in Fig. 1A or 1B. The method for telephone interaction may include the following steps.

In step 501, a user terminal establishes a voice channel for voice calls with a telephone agent system.

The user may dial the number of the telephone agent system via the user terminal and establish a voice channel for voice calls with the telephone agent system when he needs human voice services from the telephone agent system.

In step 502, the telephone agent system detects whether the telephone agent system is in a busy state currently.

The telephone agent system detects whether it is in a busy state currently after establishing a voice channel with the user terminal. The busy state may refer to a state in which no idle customer service staff is available currently, i.e., the telephone agent system detects whether there is an idle customer service staff currently.

It shall be noted that, this step may be performed once every predetermined time interval, in order to provide the human voice service for the user terminal in time.

In step 503, the telephone agent system establishes a data channel with the user terminal if the telephone agent system is in the busy state currently.

The telephone agent system may establish a data channel with the user terminal for providing a multimedia play service to the user terminal when the telephone agent system is in the busy state. The multimedia play service may include services such as video play, online news browse and play of specific songs, and so on.

The data channel may be established by the following two ways:
First way: the user terminal directly establishes the data channel with the telephone agent system.
Second way: the user terminal establishes the data channel with the telephone agent system via a third-party service platform. The third-party service platform may be configured to record various data generated when each user terminal and the telephone agent system conduct the method for telephone interaction provided by the present embodiment.

The first establishing way may include the following sub-steps:
1. The telephone agent system sends a data channel establishment request to the user terminal.
   When the telephone agent system is in the busy state, it may send a data channel establishment request to the user terminal if it needs to provide a multimedia play service for the user terminal.
2. The user terminal establishes a data channel with the telephone agent system depending on situations after receiving the data channel establishment request. Whether the user terminal establishes the data channel with the telephone agent system may be decided by the user. That is, the user himself may decide whether to accept the multimedia play service provided by the telephone agent system.

The second establishing way may include the following sub-steps:
1. The telephone agent system sends a data channel establishment request with the user terminal to the third-party service platform.
2. A third-party server sends the data channel establishment request to a corresponding user terminal.
3. The user terminal establishes the data channel with the telephone agent system via the third-party service platform depending on situations after receiving the data channel establishment request. After the data channel is established successfully, all the data transmitted between the user terminal and the telephone agent system needs to be forwarded by the third-party service platform.

The way by which the user terminal establishes the data channel with the telephone agent system may be set by the user terminal or the telephone agent system depending on situations.

Whether the multimedia information of any version is cached may be checked after the user terminal establishes the data channel with the telephone agent system. Step 504 is performed if the multimedia information of any version is cached. An instruction of waiting for receiving the multimedia information is sent to the telephone agent system and step 507 is performed if the multimedia information of any version is not cached.

In addition, if the telephone agent system is not in the busy state, then a human voice service is directly provided for the user terminal.

In step 504, the user terminal sends a version acquisition request to the telephone agent system via the data channel.

The user terminal may send a version acquisition request to the telephone agent system via the data channel when the multimedia information of any version is cached at the user terminal.

In step 505, the telephone agent system feeds the newest version number of the multimedia information back to the user terminal.

The telephone agent system may feed the newest version number of the multimedia information back to the user terminal via the data channel when it receives the version acquisition request sent from the user terminal.

In step 506, the user terminal judges whether the multimedia information of the newest version is cached according to the newest version number.

The user terminal receives the newest version number of the multimedia information fed back by the telephone agent system via the data channel and judges whether the multimedia information of the newest version is cached locally according to the newest version number.

This step may contain the following two situations according to different judging results:
1) If the multimedia information of the newest version is not cached at the user terminal, then the step of acquiring the multimedia information provided by the telephone agent system via the data channel is performed.
   If the multimedia information of the newest version is not cached at the user terminal, i.e. the multimedia information cached at the user terminal is history multimedia information, then the user terminal may send an instruction of waiting for receiving the multimedia information to the telephone agent system, and step 507 is performed.
2) If the multimedia information of the newest version is cached at the user terminal, then the step of providing the multimedia play service for the user based on the multimedia information on the call interface is performed.

If the multimedia information of the newest version is cached at the user terminal, then the user terminal may conduct multimedia playing directly based on the multimedia information, i.e. step 508 is performed.

In step 507, the telephone agent system provides the multimedia information for the user terminal via the data channel.

The telephone agent system may provide the multimedia information for the user terminal after receiving the instruction of waiting for receiving the multimedia information sent from the user terminal. In order to facilitate providing of the multimedia play service to the user terminal via the data channel, the multimedia information may be multimedia information in a webpage form. The user terminal acquires the multimedia information in the webpage form provided by the telephone agent system via the data channel. The webpage form may comply with HTML5 (Hyper Text Markup Language 5) standard.

This step may have the following three situations according to different ways for acquiring the multimedia information.

### First situation:

1. The user terminal sends the acquisition request for multimedia information to the telephone agent system via the data channel. This request may be sent by the user terminal automatically, or may be sent by the user terminal under operation of the user.
2. The telephone agent system provides the multimedia information in the webpage form for the user terminal based on the acquisition request for multimedia information. That is, the telephone agent system sends the multimedia information in the webpage form to the user terminal after receiving the acquisition request for multimedia information sent from the user terminal, and the user terminal receives the multimedia information in the webpage form.

Because the multimedia information in the webpage form may include one or more than one pages, the acquisition request for multimedia information may be a request for directly acquiring all pages of the multimedia information; or may be a request for only acquiring one page of the multimedia information. For example, for the multimedia information for online news browse, the user terminal may acquire the homepage of the multimedia information firstly, and the homepage only contains news headlines. Then, when the user taps a news headline, the user terminal may send an acquisition request for acquiring the news content page corresponding to the news headline to the telephone agent system. The telephone agent system sends the news content page corresponding to the news headline in the multimedia information to the user terminal after receiving the request.

Second situation: the telephone agent system pushes the multimedia information in the webpage form to the user terminal via the data channel. That is, the telephone agent system directly sends the multimedia information in the webpage form to the user terminal. The user terminal receives the multimedia information in the webpage form. The pushing process may be controlled by the customer service staffs of the telephone agent system.

Similarly, because the multimedia information may include one or more than one pages, the telephone agent system may push all pages of the multimedia information in a single push process; or may only push one page of the multimedia information in a single push process according to the control of the customer service staffs.

Third situation: this situation is a situation combining the first situation and the second situation. That is, when the user terminal acquires the multimedia information, it may receive the multimedia information pushed by the telephone agent system passively, or it may send the acquisition request for multimedia information actively to acquire the multimedia information from the telephone agent system. For example, the homepage of the multimedia information for online news browse may be pushed to the user terminal via the telephone agent system, and the homepage only contains news headlines. After the user taps a news headline, the user terminal sends an acquisition request for corresponding news content page to the telephone agent system. The telephone agent system sends the news content page corresponding to the news headline in the multimedia information to the user terminal after receiving the request.

It shall be noted that, if history multimedia information is cached at the user terminal, when receiving the multimedia information of the newest version, the user terminal may not receive the same part in the multimedia information of the newest version as that in the history multimedia information, for example, the same picture files and text files, and so on. Judgment information regarding the same part may be contained in the newest version number of the multimedia information acquired by the user terminal in step 505. Or, the telephone agent system acquires the version number of the history multimedia information cached at the user terminal, and then it sends the different part in the multimedia information of the newest version from that in the history multimedia information according to the version number. In this way, wastes in communication resources may be reduced and efficiency in information acquisition may be improved.

In step 508, the user terminal provides the multimedia play service for the user based on the multimedia information on a call interface.

The user terminal needs to make the multimedia information run and display it on the call interface firstly when providing the multimedia play service for the user based on the multimedia information on the call interface.

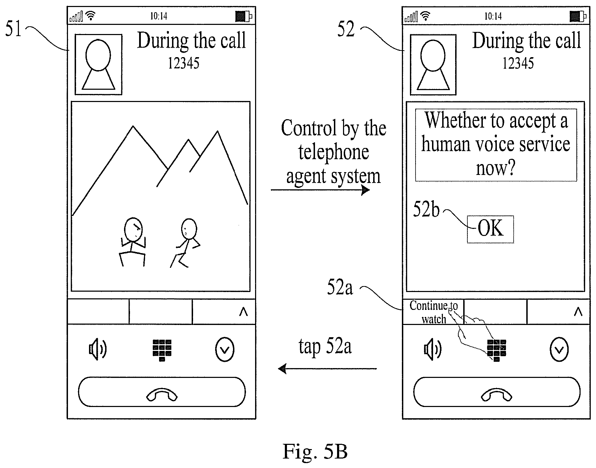

After the multimedia information running and displayed on the call interface, the user and/or the telephone agent system may control the multimedia information. For example, as shown in Fig. 5B, the user terminal is playing a piece of video on page 51, and the telephone agent system may control the user terminal to pause playing of the video and switch to page 52 to reminder the user when the telephone agent system detects that it is not in the busy state currently. The user may switch back to page 51 to continue playing of the video by tapping the button 52a, or may accept the human voice service by tapping the button 52b.

Accordingly, in the method for telephone interaction provided by the present embodiment, by a data channel between a user terminal and a telephone agent system, when the telephone agent system is in a busy state, an entertainment service may be provided to a user. Thus, the method may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

It shall be further noted that, in the method for telephone interaction provided by the present embodiment, whether the multimedia information of the newest version is cached at the user terminal is judged, and the multimedia play service is provided to the user directly based on the multimedia information of the newest version when multimedia information of the newest version is cached at the user terminal. Thus, wastes in communication resources are reduced.

It shall be further noted that, in the method for telephone interaction provided by the present embodiment, multimedia information in a webpage form is provided to the user terminal by the telephone agent system. Such providing manner is easy for providing multimedia play services for the user terminal. Thus, the difficulties in providing multimedia play services for the user terminal are reduced

### (III) The telephone agent system provides a lottery service for the user terminal.

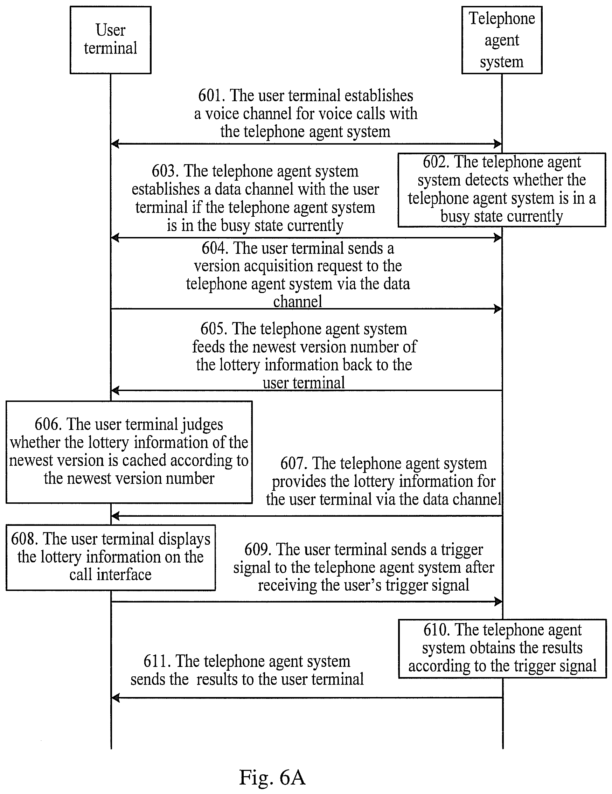

Referring to Fig. 6A, a flow chart of a method for telephone interaction provided by another embodiment of the present disclosure is shown. The present embodiment is described by taking an example where the method for telephone interaction is applied in the implementation environment as shown in Fig. 1A or 1B. The method for telephone interaction may include the following steps:
In step 601, the user terminal establishes a voice channel for voice calls with the telephone agent system.

The user may dial the number of the telephone agent system via the user terminal and establish a voice channel for voice calls with the telephone agent system when he needs human voice services from the telephone agent system.

In step 602, the telephone agent system detects whether the telephone agent system is in a busy state currently.

The telephone agent system detects whether it is in a busy state currently after establishing a voice channel with the user terminal. The busy state may refer to a state in which no idle customer service staff is available currently, i.e., the telephone agent system detects whether there is an idle customer service staff currently.

It shall be noted that, this step may be performed once every predetermined time interval, in order to provide the human voice services for the user terminal in time.

In step 603, the telephone agent system establishes a data channel with the user terminal if the telephone agent system is in the busy state currently.

The telephone agent system may establish a data channel with the user terminal for providing a lottery service to the user terminal when the telephone agent system is in the busy state.

The data channel may be established by the following two ways:
First way: the user terminal directly establishes the data channel with the telephone agent system.
Second way: the user terminal establishes the data channel with the telephone agent system via a third-party service platform. The third-party service platform may be configured to record various data generated when each user terminal and the telephone agent system conduct the method for telephone interaction provided by the present embodiment.

The first establishing way may include the following sub-steps:
1. The telephone agent system sends a data channel establishment request to the user terminal.
   When the telephone agent system is in the busy state, it may send a data channel establishment request to the user terminal if it needs to provide a lottery service for the user terminal.
2. The user terminal establishes a data channel with the telephone agent system depending on situations after receiving the data channel establishment request.

Whether the user terminal establishes the data channel with the telephone agent system may be decided by the user. That is, the user himself may decide whether to accept the lottery service provided by the telephone agent system.

The second establishing way may include the following sub-steps:
1. The telephone agent system sends a data channel establishment request with the user terminal to the third-party service platform.
2. A third-party server sends the data channel establishment request to a corresponding user terminal.
3. The user terminal establishes the data channel with the telephone agent system via the third-party service platform depending on situations after receiving the data channel establishment request. After the data channel is established successfully, all the data transmitted between the user terminal and the telephone agent system needs to be forwarded by the third-party service platform.

The way by which the user terminal establishes the data channel with the telephone agent system may be set by the user terminal or the telephone agent system depending on situations.

Whether the lottery information of any version is cached may be checked after the user terminal establishes the data channel with the telephone agent system. Step 604 is performed if the lottery information of any version is cached. An instruction of waiting for receiving the lottery information is sent to the telephone agent system and step 607 is performed if the lottery information of any version is not cached.

In addition, if the telephone agent system is not in the busy state, then a human voice service is directly provided for the user terminal.

In step 604, the user terminal sends a version acquisition request to the telephone agent system via the data channel.

The user terminal may send a version acquisition request to the telephone agent system via the data channel when the lottery information of any version is cached at the user terminal.

In step 605, the telephone agent system feeds the newest version number of the lottery information back to the user terminal.

The telephone agent system may feed the newest version number of the lottery information back to the user terminal via the data channel when it receives the version acquisition request sent from the user terminal.

In step 606, the user terminal judges whether the lottery information of the newest version is cached according to the newest version number.

The user terminal receives the newest version number of the lottery information fed back by the telephone agent system via the data channel and judges whether the lottery information of the newest version is cached locally according to the newest version number.

This step may contain the following two situations according to different judging results:
1) If the lottery information of the newest version is not cached at the user terminal, then the step of acquiring the lottery information provided by the telephone agent system via the data channel is performed.
   If the lottery information of the newest version is not cached at the user terminal, i.e. the lottery information cached in the user terminal is history lottery information, then the user terminal may send an instruction of waiting for receiving the lottery information to the telephone agent system, and step 607 is performed.
2) If the lottery information of the newest version is cached at the user terminal, then the step of providing the lottery service for the user based on the lottery information on the call interface is performed.

If the lottery information of the newest version is cached at the user terminal, then the user terminal may draw a lottery directly based on the lottery information, i.e. step 608 is performed.

In step 607, the telephone agent system provides the lottery information for the user terminal via the data channel.

The telephone agent system may provide the lottery information for the user terminal after receiving the instruction of waiting for receiving the lottery information sent from the user terminal. In order to facilitate providing of the lottery service to the user terminal via the data channel, the lottery information may be lottery information in a webpage form. The user terminal acquires the lottery information in the webpage form provided by the telephone agent system via the data channel. The webpage form may comply with HTML5 (Hyper Text Markup Language 5) standard.

This step may have the following three situations according to different ways for acquiring the lottery information.

### First situation:

1. The user terminal sends the acquisition request for lottery information to the telephone agent system via the data channel. This request may be sent by the user terminal automatically, or may be sent by the user terminal under operation of the user.
2. The telephone agent system provides the lottery information in the webpage form for the user terminal based on the acquisition request for lottery information. That is, the telephone agent system sends the lottery information in the webpage form to the user terminal after receiving the acquisition request for lottery information sent from the user terminal, and the user terminal receives the lottery information in the webpage form.

Because the lottery information in the webpage form may include one or more than one pages, the acquisition request for lottery information may be a request for directly acquiring all the pages of the lottery information; or may be a request for only acquiring one page of the lottery information. For example, when the telephone agent system provides the lottery service for the user terminal, the user terminal may acquire the homepage of the lottery information firstly. After the user draws a lottery by tapping the "Draw" button, the user terminal may send an acquisition request for result page to the telephone agent system. The telephone agent system sends the result page to the user terminal after receiving the request.

Second situation: the telephone agent system pushes the lottery information in the webpage form to the user terminal via the data channel. That is, the telephone agent system directly sends the lottery information in the webpage form to the user terminal. The user terminal receives the lottery information in the webpage form. The pushing process may be controlled by the customer service staffs of the telephone agent system.

Similarly, because the lottery information may include one or more than one pages, the telephone agent system may push all the pages of the lottery information in a single push process; and may also only push one page of the lottery information in a single push process according to the control of the customer service staffs.

Third situation: this situation is a situation combining the first situation and the second situation. That is, when the user terminal acquires the lottery information, it may receive the lottery information pushed by the telephone agent system passively, or it may send the acquisition request for lottery information actively to acquire the lottery information from the telephone agent system. For example, the homepage of the lottery information may be pushed to the user terminal by the telephone agent system. After the user draw a lottery by tapping the "Draw" button, the user terminal may send the acquisition request for result page to the telephone agent system. The telephone agent system sends the result page to the user terminal after receiving the request.

It shall be noted that, if history lottery information is cached at the user terminal, when receiving the lottery information of the newest version, it may not receive the same part in the lottery information of the newest version as that in the history lottery information, for example, the same picture files and text files, and so on. Judgment information regarding the same part may be contained in the newest version number of the lottery information acquired by the user terminal in step 605. Or, the telephone agent system acquires the version number of the history lottery information cached at the user terminal, and then it sends the different part in the lottery information of the newest version from that in the history lottery information according to the version number. In this way, wastes in communication resources may be reduced and efficiency in information acquisition may be improved.

In step 608, the user terminal displays the lottery information on a call interface.

The user terminal may display the lottery information on the call interface after acquiring the lottery information.

In step 609, the user terminal sends a trigger signal to the telephone agent system after receiving the user's trigger signal.

After the user terminal displays the lottery information on the call interface, the user may send a trigger signal on the call interface to draw a lottery. The user terminal sends the trigger signal to the telephone agent system.

In step 610, the telephone agent system obtains results according to the trigger signal.

The telephone agent system obtains the results of the user terminal in a predetermined way after receiving the trigger signal.

In step 611, the telephone agent system sends the results to the user terminal.

After the telephone agent system sends the results to the user terminal, the user terminal may switch to a reminding page to inform the user of the results.

It shall be noted that, when the telephone agent system provides the lottery service for the user terminal, both the telephone agent system and the user terminal may control the display contents of the display interface.

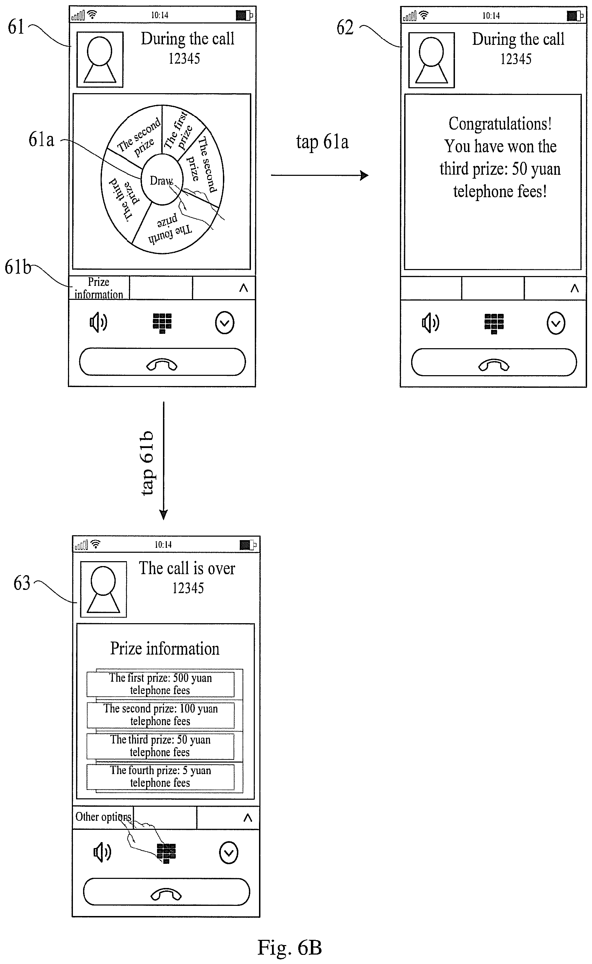

As an example, as shown in Fig. 6B, after the user taps the "DRAW" button 61a on page 61, the user terminal sends a trigger signal to the telephone agent system. The user terminal switches to the result page 62 to display the results after receiving the results sent from the telephone agent system. In addition, the user may tap the "Prize information" button 61b on page 61, and the user terminal may switch to the prize information page 63.

Accordingly, in the method for telephone interaction provided by the present embodiment, by a data channel between a user terminal and a telephone agent system, when the telephone agent system is in a busy state, an entertainment service may be provided to a user. Thus, the method may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

It shall be further noted that, in the method for telephone interaction provided by the present embodiment, whether the lottery information of the newest version is cached at the user terminal is judged, and the lottery service is provided to the user directly based on the lottery information of the newest version when lottery information of the newest version is cached at the user terminal. Thus, wastes in communication resources are reduced.

In view of the methods for telephone interaction provided by above three embodiments, the telephone agent system may provide at least one of the three kinds of entertainment services, including the game service, the multimedia play service and the lottery service. Providing which one or one more entertainment services may be decided by the telephone agent system or the user terminal. In addition, the telephone agent system may also provide other kinds of possible entertainment services for the user terminal.

The following is the device embodiments of the present disclosure which may be used to perform the method embodiments of the present disclosure. For the undisclosed details in the device embodiments of the present disclosure, please refer to the method embodiments of the present disclosure.

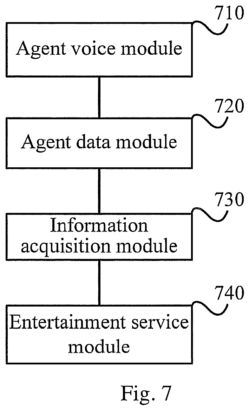

Referring to Fig. 7, a block diagram of a device for telephone interaction provided by an embodiment of the present disclosure is shown. The device for telephone interaction may be achieved by software, hardware or the combination thereof to be part or whole of the user terminal 110 as shown in Fig. 1A. The device for telephone interaction may include: an agent voice module 710, an agent data module 720, an information acquisition module 730 and an entertainment service module 740.

The agent voice module 710 is configured to establish a voice channel for voice calls with a telephone agent system.

The agent data module 720 is configured to establish a data channel with the telephone agent system when the telephone agent system is in a busy state.

The information acquisition module 730 is configured to acquire entertainment information provided by the telephone agent system via the data channel.

The entertainment service module 740 is configured to provide an entertainment service for a user based on the entertainment information on a call interface.

Accordingly, in the device for telephone interaction provided by the present embodiment, by a data channel between a user terminal and a telephone agent system, when the telephone agent system is in a busy state, an entertainment service may be provided to a user. Thus, the device may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

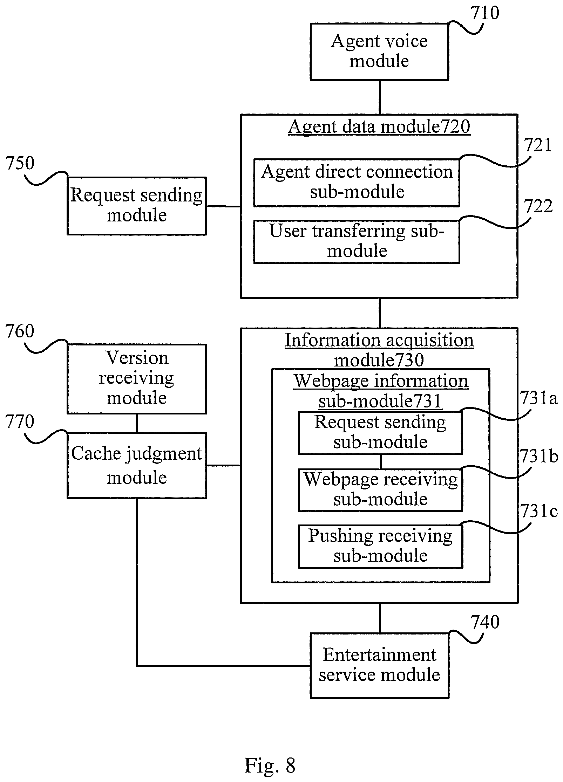

Referring to Fig. 8, a block diagram of a device for telephone interaction provided by another embodiment of the present disclosure is shown. The device for telephone interaction may be achieved by software, hardware or the combination thereof to be part or whole of the user terminal 110 as shown in Fig. 1B. The device for telephone interaction may include: an agent voice module 710, an agent data module 720, an information acquisition module 730 and an entertainment service module 740.

The agent voice module 710 is configured to establish a voice channel for voice calls with a telephone agent system.

The agent data module 720 is configured to establish a data channel with the telephone agent system when the telephone agent system is in a busy state.

The information acquisition module 730 is configured to acquire entertainment information provided by the telephone agent system via the data channel.

The entertainment service module 740 is configured to provide an entertainment service for a user based on the entertainment information on a call interface.

Optionally, the information acquisition module 730 includes:
a webpage information sub-module 731 configured to acquire the entertainment information in a webpage form provided by the telephone agent system via the data channel.

Optionally, the webpage information sub-module 731 includes: a request sending sub-module 731a and a webpage receiving sub-module 731b, and/or a pushing receiving sub-module 731c.

The request sending sub-module 731a is configured to send an information acquisition request to the telephone agent system via the data channel.

The webpage receiving sub-module 731b is configured to receive the entertainment information in the webpage form fed back by the telephone agent system based on the information acquisition request.

The pushing receiving sub-module 731c is configured to receive the entertainment information in the webpage form pushed by the telephone agent system via the data channel.

Optionally, the entertainment information includes multimedia information and/or game information.

Optionally, the agent data module 720 includes:
an agent direct connection sub-module 721 configured to directly establish the data channel with the telephone agent system; and
a user transferring sub-module 722 configured to establish the data channel with the telephone agent system via a third-party service platform.

Optionally, the device further includes: a request sending module 750, a version receiving module 760 and a cache judgment module 770.

The request sending module750 is configured to send a version acquisition request to the telephone agent system via the data channel.

The version receiving module 760 is configured to receive the newest version number of the entertainment information fed back by the telephone agent system via the data channel.

The cache judgment module 770 is configured to judge whether the entertainment information of the newest version is cached according to the newest version number.

The information acquisition module 730 is configured to acquire the entertainment information provided by the telephone agent system via the data channel when the entertainment information is not cached.

The entertainment service module 740 is configured to provide the entertainment service for the user based on the entertainment information on the call interface when the entertainment information is cached.

Accordingly, in the device for telephone interaction provided by the present embodiment, by a data channel between a user terminal and a telephone agent system, when the telephone agent system is in a busy state, an entertainment service may be provided to a user. Thus, the present disclosure may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

It shall be further noted that, in the device for telephone interaction provided by the present embodiment, whether the entertainment information of the newest version is cached at the user terminal is judged, and the entertainment service is provided to the user directly based on the entertainment information of the newest version when the entertainment information of the newest version is cached at the user terminal. Thus, wastes in communication resources are reduced.

It shall be further noted that, in the device for telephone interaction provided by the present embodiment, entertainment information in a webpage form is provided to the user terminal by the telephone agent system. Such providing manner is easy for providing entertainment services for the user terminal. Thus, the difficulties in providing entertainment services for the user terminal are reduced.

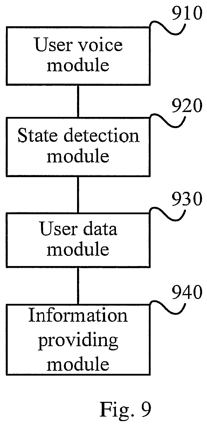

Referring to Fig. 9, a block diagram of a device for telephone interaction provided by another embodiment of the present disclosure is shown. The device for telephone interaction may be achieved by software, hardware or the combination thereof to be part or whole of the telephone agent system 120 as shown in Fig. 1A. The device for telephone interaction may include: a user voice module 910, a state detection module 920, a user data module 930 and an information providing module 940.

The user voice module 910 is configured to establish a voice channel for voice calls with a user terminal.

The state detection module 920 is configured to detect whether a telephone agent system is in a busy state currently.

The user data module 930 is configured to establish a data channel with the user terminal if the telephone agent system is in the busy state currently.

The information providing module 940 is configured to provide the entertainment information for the user terminal via the data channel, the user terminal being configured to provide an entertainment service for a user based on the entertainment information on a call interface.

Accordingly, in the device for telephone interaction provided by the present embodiment, by a data channel between a user terminal and a telephone agent system, when the telephone agent system is in a busy state, an entertainment service may be provided to a user. Thus, the device may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved

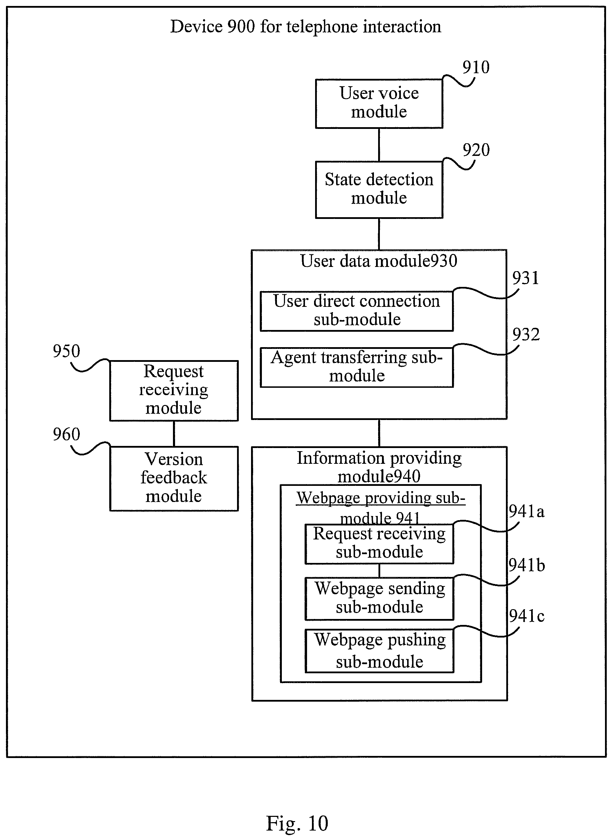

Referring to Fig. 10, a block diagram of a device 900 for telephone interaction provided by another embodiment of the present disclosure is shown. The device 900 for telephone interaction may be achieved by software, hardware or the combination thereof to be part or whole of the telephone agent system 120 as shown in Fig. 1B. The device 900 for telephone interaction may include: a user voice module 910, a state detection module 920, a user data module 930 and an information providing module 940.

The user voice module 910 is configured to establish a voice channel for voice calls with a user terminal.

The state detection module 920 is configured to detect whether a telephone agent system is in a busy state currently.

The user data module 930 is configured to establish a data channel with the user terminal if the telephone agent system is in the busy state currently.

The information providing module 940 is configured to provide the entertainment information for the user terminal via the data channel, the user terminal being configured to provide an entertainment service for a user based on the entertainment information on a call interface.

Optionally, the information providing module 940 includes:
a webpage providing sub-module 941 configured to provide the entertainment information in a webpage form for the user terminal via the data channel.

Optionally, the webpage providing sub-module 941 includes: a request receiving sub-module 941a and a webpage sending sub-module 941b, and/or a webpage pushing sub-module 941c.

The request receiving sub-module 941a is configured to receive an information acquisition request sent from the user terminal via the data channel.

The webpage sending sub-module 941b is configured to provide the entertainment information in the webpage form for the user terminal based on the information acquisition request.

The webpage pushing sub-module 941c is configured to push the entertainment information in the webpage form to the user terminal via the data channel.

Optionally, the entertainment information includes multimedia information and/or game information.

Optionally, the user data module 930 includes:
a user direct connection sub-module 931 configured to directly establish the data channel with the user terminal; and
an agent transferring sub-module 932 configured to establish the data channel with the user terminal via a third-party service platform.

Optionally, the device further includes:
a request receiving module 950 configured to receive a version acquisition request sent from the user terminal via the data channel; and
a version feedback module 960 configured to feed the newest version number of the entertainment information back to the user terminal; the user terminal being configured to directly provide an entertainment service for a user based on the entertainment information on the call interface when detecting, according to the newest version number, that the entertainment information of the newest version number is cached.

Accordingly, in the device for telephone interaction provided by the present embodiment, by a data channel between a user terminal and a telephone agent system, when the telephone agent system is in a busy state, an entertainment service may be provided to a user. Thus, the device may reduce the problems of the prior art solutions wherein a user may hang up the current call directly due to too long waiting time and thus the current call becomes a void call and a later call is needed to solve the user's problem, which results in wastes in communication resources of the telephone agent system. Consequently, the waiting time for a user is extended by the entertainment service, another call procedure by the user is avoided and thereby the communication resources are saved.

It shall be further noted that, in the device for telephone interaction provided by the present embodiment, whether the entertainment information of the newest version is cached at the user terminal is judged, and the entertainment service is provided to the user directly based on the entertainment information of the newest version when the entertainment information of the newest version is cached at the user terminal. Thus, wastes in communication resources are reduced.

It shall be further noted that, in the device for telephone interaction provided by the present embodiment, entertainment information in a webpage form is provided to the user terminal by the telephone agent system. Such providing manner is easy for providing entertainment services for the user terminal. Thus, the difficulties in providing entertainment services for the user terminal are reduced.

As for the devices in the above embodiments, specific implementations for respective modules to perform operations have been described in detail in the embodiments regarding methods, and thus the detailed descriptions thereof will be omitted here.

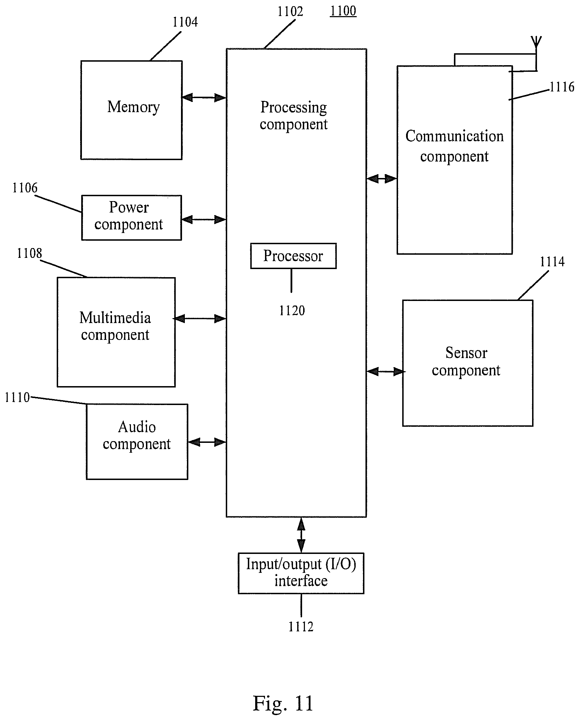

Fig. 11 is a block diagram of a device 1100 as a user terminal in the method for telephone interaction according to an exemplary embodiment. For example, the device 1100 may be a mobile phone, a computer, a digital broadcast terminal, a messaging device, a gaming console, a tablet, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium having stored therein instructions that, when executed by a processor of a device 1100, causes the device 1100 to perform the method for telephone interaction provided by any one of the above embodiments.

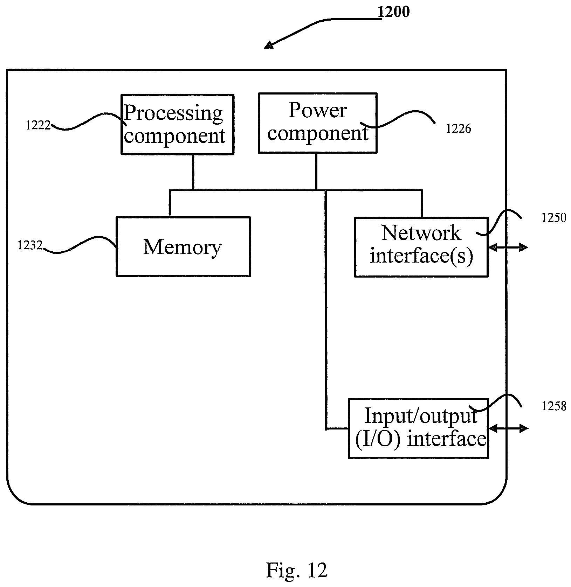

FIG. 12 is a block diagram of a device 1200 for telephone interaction according to an exemplary embodiment. For example, the device 1200 may be provided as a telephone agent system or a third-party service platform. Referring to FIG. 12, the device 1200 includes a processing component 1222 that further includes one or more processors, and memory resources represented by a memory 1232 for storing instructions executable by the processing component 1222, such as application programs. The application programs stored in the memory 1232 may include one or more modules each corresponding to a set of instructions. Further, the processing component 1222 is configured to execute the instructions to perform the method for telephone interaction provided by any one of the above embodiments.

The device 1200 may also include a power component 1226 configured to perform power management of the device 1200, wired or wireless network interface(s) 1250 configured to connect the device 1200 to a network, and an input/output (I/O) interface 1258. The device 1200 may operate based on an operating system stored in the memory 1232, such as Windows ServerTM, Mac OS XTM, UnixTM, LinuxTM, FreeBSDTM, or the like.

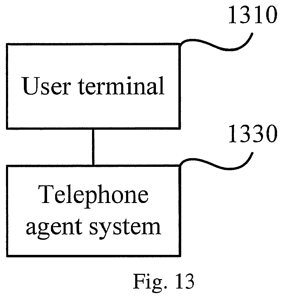

Referring to Fig. 13, a block diagram of a system for telephone interaction provided by an embodiment of the present disclosure is shown. The system includes a user terminal 1310 and a telephone agent system 1330.

The user terminal 1310 includes any one of the devices shown in Figs. 7, 8 and 11.

The telephone agent system 1330 includes any one of the devices shown in Figs. 9, 10 and 12.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with the scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for telephone interaction applied in a user terminal in a call waiting state with a telephone agent, the method comprising:
establishing (201) a voice channel for voice calls with a telephone agent system;
establishing (202) a data channel with the telephone agent system when the telephone agent system is in a busy state;
acquiring (203) entertainment information provided by the telephone agent system via the data channel; and
providing (204) an entertainment service for a user based on the entertainment information on a call interface, **characterized in that** the method further comprises:
sending (404, 504, 604) a version acquisition request to the telephone agent system via the data channel;
receiving (405, 505, 605) the newest version number of the entertainment information fed back by the telephone agent system via the data channel;
judging (406, 506, 606) whether the entertainment information of the newest version is cached according to the newest version number;
performing the step of acquiring and caching (203) the entertainment information provided by the telephone agent system via the data channel if the entertainment information is not cached; and
performing the step of providing (204) the entertainment service for a user based on the entertainment information on the call interface if the entertainment information is cached;
and wherein the entertainment information includes multimedia information and/or game information.

2. The method according to claim 1, **characterized in that**, acquiring (203) entertainment information provided by the telephone agent system via the data channel comprises:
acquiring the entertainment information in a webpage form provided by the telephone agent system via the data channel.

3. The method according to claim 2, **characterized in that**, acquiring the entertainment information in a webpage form provided by the telephone agent system via the data channel comprises:
sending an information acquisition request to the telephone agent system via the data channel; and receiving the entertainment information in the webpage form fed back by the telephone agent system based on the information acquisition request;
and/or,
receiving the entertainment information in the webpage form pushed by the telephone agent system via the data channel.

4. A user terminal in a call waiting state with a telephone agent, the user terminal comprises:
an agent voice module (710) configured to establish a voice channel for voice calls with a telephone agent system;
an agent data module (720) configured to establish a data channel with the telephone agent system when the telephone agent system is in a busy state;
an information acquisition module (730) configured to acquire entertainment information provided by the telephone agent system via the data channel; and
an entertainment service module (740) configured to provide an entertainment service for a user based on the entertainment information on a call interface, **characterized in that** the user terminal comprises:
a request sending module, a version receiving module and a cache judgment module;
the request sending module is configured to send a version acquisition request to the telephone agent system via the data channel;
the version receiving module is configured to receive the newest version number of the entertainment information fed back by the telephone agent system via the data channel;
the cache judgment module is configured to judge whether the entertainment information of the newest version is cached according to the newest version number;
the information acquisition module is configured to acquire and cache the entertainment information provided by the telephone agent system via the data channel when the entertainment information is not cached; and
the entertainment service module is configured to provide the entertainment service for the user based on the entertainment information on the call interface when the entertainment information is cached;
and wherein the entertainment information includes multimedia information and/or game information.

5. The user terminal according to claim 4, **characterized in that**, the information acquisition module (730) comprises:
a webpage information sub-module (731) configured to acquire the entertainment information in a webpage form provided by the telephone agent system via the data channel.

## Patentansprüche

1. Verfahren zur Telefoninteraktion, das in einem Benutzerendgerät in einem Anrufwartezustand angewendet wird, wobei das Verfahren umfasst:
Aufbauen (201) eines Sprachkanals für Sprachanrufe mit einem Telefonagenten-System,
Aufbauen (202) eines Datenkanals mit dem Telefonagenten-System, wenn das Telefonagenten-System im Besetztzustand ist,
Erlangen (203) von Unterhaltungsinformationen, die von dem Telefonagenten-System über den Datenkanal bereitgestellt werden, und
Bereitstellen (204) eines Unterhaltungsdienstes für einen Benutzer auf der Grundlage der Unterhaltungsinformationen auf einer Anrufschnittstelle,
**dadurch gekennzeichnet, dass** das Verfahren ferner umfasst:
Senden (404, 504, 604) einer Versionserlangungsanfrage an das Telefonagenten-System über den Datenkanal,
Empfangen (405, 505, 605) der neuesten Versionsnummer der Unterhaltungsinformationen, die vom Telefonagenten-System über den Datenkanal zurückgemeldet wird,
Beurteilen (406, 506, 606), ob die Unterhaltungsinformationen der neuesten Version entsprechend der neuesten Versionsnummer zwischengespeichert sind,
Ausführen des Schritts des Erlangens und Zwischenspeicherns (203) der Unterhaltungsinformationen, die vom Telefonagenten-System über den Datenkanal bereitgestellt werden, wenn die Unterhaltungsinformationen nicht zwischengespeichert sind, und
Durchführen des Schrittes des Bereitstellens (204) des Unterhaltungsdienstes für einen Benutzer auf der Grundlage der Unterhaltungsinformationen auf der Anrufschnittstelle, wenn die Unterhaltungsinformationen zwischengespeichert sind,
und wobei die Unterhaltungsinformationen Multimedia-Informationen und/oder Spielinformationen umfassen.

2. Verfahren nach Anspruch 1, **dadurch gekennzeichnet, dass** das Erlangen (203) von Unterhaltungsinformationen, die vom Telefonagenten-System über den Datenkanal bereitgestellt werden, umfasst:
Erlangen der Unterhaltungsinformationen in einer Webseitenform, die vom Telefonagenten-System über den Datenkanal bereitgestellt wird.

3. Verfahren nach Anspruch 2, **dadurch gekennzeichnet, dass** das Erlangen der Unterhaltungsinformationen in einer Webseitenform, die vom Telefonagenten-System über den Datenkanal bereitgestellt wird, umfasst:
Senden einer Informationserfassungsanfrage an das Telefonagenten-System über den Datenkanal, und Empfangen der Unterhaltungsinformationen in der Webseitenform, die vom Telefonagenten-System auf der Grundlage der Informationserfassungsanfrage zurückgesandt wird,
und/oder,
Empfangen der Unterhaltungsinformationen in der vom Telefonagenten-System über den Datenkanal pushgesandten Webseitenform.

4. Benutzerendgerät in einem Anrufwartezustand mit einem Telefonagenten, wobei das Benutzerendgerät umfasst:
ein Agentensprachmodul (710), das dazu konfiguriert ist, einen Sprachkanal für Sprachanrufe mit einem Telefonagenten-System aufzubauen,
ein Agentendatenmodul (720), das dazu konfiguriert ist, einen Datenkanal mit dem Telefonagenten-System aufzubauen, wenn sich das Telefonagenten-System in einem Besetzt-Zustand befindet,
ein Informationserfassungsmodul (730), das dazu konfiguriert ist, Unterhaltungsinformationen zu erfassen, die vom Telefonagenten-System über den Datenkanal bereitgestellt werden, und
ein Unterhaltungsdienstmodul (740), das dazu konfiguriert ist, einen Unterhaltungsdienst für einen Benutzer basierend auf den Unterhaltungsinformationen auf einer Anrufschnittstelle bereitzustellen,
**dadurch gekennzeichnet, dass** das Benutzerendgerät umfasst:
ein Anfragesendemodul, ein Versionsempfangsmodul und ein Cachebeurteilungsmodul, wobei
das Anfragesendemodul dazu konfiguriert ist, eine Versionserfassungsanfrage über den Datenkanal an das Telefonagenten-System zu senden,
das Versionsempfangsmodul dazu konfiguriert ist, die neueste Versionsnummer der Unterhaltungsinformationen zu empfangen, die vom Telefonagenten-System über den Datenkanal zurückgemeldet werden,
das Cachebeurteilungsmodul dazu konfiguriert ist, zu beurteilen, ob die Unterhaltungsinformationen der neuesten Version entsprechend der neuesten Versionsnummer zwischengespeichert sind,
das Informationserfassungsmodul dazu konfiguriert ist, die vom Telefonagenten-System über den Datenkanal bereitgestellten Unterhaltungsinformationen zu erfassen und zwischenzuspeichern, wenn die Unterhaltungsinformationen nicht zwischengespeichert sind, und
das Unterhaltungsdienstmodul dazu konfiguriert ist, den Unterhaltungsdienst für den Benutzer auf der Grundlage der Unterhaltungsinformationen auf der Anrufschnittstelle bereitzustellen, wenn die Unterhaltungsinformationen zwischengespeichert sind,
wobei die Unterhaltungsinformationen Multimedia-Informationen und/oder Spielinformationen umfassen.

5. Benutzerterminal nach Anspruch 4, **dadurch gekennzeichnet, dass** das Informationserfassungsmodul (730) umfasst:
ein Webseiten-Informationsuntermodul (731), das dazu konfiguriert ist, die Unterhaltungsinformationen in einer Webseitenform zu erfassen, die vom Telefonagenten-System über den Datenkanal bereitgestellt wird.

## Revendications

1. Procédé d'interaction téléphonique appliqué dans un terminal d'utilisateur dans un état d'attente d'appel avec un agent téléphonique, le procédé comprenant :
l'établissement (201) d'un canal vocal pour les appels vocaux avec un système d'agent téléphonique ;
l'établissement (202) d'un canal de données avec le système d'agent téléphonique lorsque le système d'agent téléphonique est dans un état occupé ;
l'acquisition (203) d'informations de divertissement fournies par le système d'agent téléphonique via le canal de données ; et
la fourniture (204) d'un service de divertissement pour un utilisateur sur la base des informations de divertissement, sur une interface d'appel, **caractérisé en ce que** le procédé comprend en outre :
l'envoi (404, 504, 604) d'une demande d'acquisition de version au système d'agent téléphonique via le canal de données ;
la réception (405, 505, 605) du numéro de la dernière version des informations de divertissement, renvoyé par le système d'agent téléphonique via le canal de données ;
le jugement (406, 506, 606) quant à savoir si les informations de divertissement de la dernière version sont mises en cache selon le numéro de la dernière version ;
la réalisation de l'étape d'acquisition et de mise en cache (203) des informations de divertissement fournies par le système d'agent téléphonique via le canal de données si les informations de divertissement ne sont pas mises en cache ; et
la réalisation de l'étape de fourniture (204) du service de divertissement à un utilisateur sur la base des informations de divertissement sur l'interface d'appel si les informations de divertissement sont mises en cache ;
et dans lequel les informations de divertissement comportent des informations multimédia et/ou des informations de jeux.

2. Procédé selon la revendication 1, **caractérisé en ce que**, l'acquisition (203) d'informations de divertissement fournies par le système d'agent téléphonique via le canal de données comprend :
l'acquisition des informations de divertissement sous forme d'une page web fournie par le système d'agent téléphonique via le canal de données.

3. Procédé selon la revendication 2, **caractérisé en ce que**, l'acquisition des informations de divertissement sous forme d'une page web fournie par le système d'agent téléphonique via le canal de données comprend :
l'envoi d'une demande d'acquisition d'informations au système d'agent téléphonique via le canal de données ; et la réception des informations de divertissement sous la forme de la page web renvoyée par le système d'agent téléphonique sur la base de la demande d'acquisition d'informations ;
et/ou,
la réception des informations de divertissement sous la forme de la page web poussée par le système d'agent téléphonique via le canal de données.

4. Terminal d'utilisateur dans un état d'attente d'appel avec un agent téléphonique, le terminal d'utilisateur comprend :
un module vocal d'agent (710) configuré pour établir un canal vocal pour appels vocaux avec un système d'agent téléphonique ;
un module de données d'agent (720) configuré pour établir un canal de données avec le système d'agent téléphonique lorsque le système d'agent téléphonique est dans un état occupé ;
un module d'acquisition d'informations (730) configuré pour acquérir des informations de divertissement fournies par le système d'agent téléphonique via le canal de données ; et
un module de service de divertissement (740) configuré pour fournir un service de divertissement pour un utilisateur sur la base des informations de divertissement, sur une interface d'appel, **caractérisé en ce que** le terminal d'utilisateur comprend :
un module d'envoi de demandes, un module de réception de versions et un module de jugement de cache ;
le module d'envoi de demandes est configuré pour envoyer une demande d'acquisition de version au système d'agent téléphonique via le canal de données ;
le module de réception de versions est configuré pour recevoir le numéro de la dernière version des informations de divertissement renvoyées par le système d'agent téléphonique via le canal de données ;
le module de jugement de cache est configuré pour juger si les informations de divertissement de la dernière version sont mises en cache selon le numéro de la dernière version ;
le module d'acquisition d'informations est configuré pour acquérir et mettre en cache les informations de divertissement fournies par le système d'agent téléphonique via le canal de données lorsque les informations de divertissement ne sont pas mises en cache ; et
le module de service de divertissement est configuré pour fournir le service de divertissement à l'utilisateur sur la base des informations de divertissement sur l'interface d'appel lorsque les informations de divertissement sont mises en cache ;
et dans lequel les informations de divertissement comportent des informations multimédia et/ou des informations de jeux.

5. Terminal d'utilisateur selon la revendication 4, **caractérisé en ce que**, le module d'acquisition d'informations (730) comprend :
un sous-module d'informations de page web (731) configuré pour acquérir les informations de divertissement sous la forme d'une page web fournie par le système d'agent téléphonique via le canal de données.
